# NEUE EUROPÄISCHE PATENTSCHRIFT

(11) **EP 0 294 697 B2**
(45) Veröffentlichungstag und Bekanntmachung des Hinweises auf die Entscheidung über den Einspruch: **03.09.1997**
(45) Hinweis auf die Patenterteilung: 08.07.1992
(21) Anmeldenummer: 88108753.0
(22) Anmeldetag: 01.06.1988
(51) Int. Cl.: F16H 57/04

(54) **Getriebe mit Tauchschmierung**
Transmission with splash lubrication
Transmission avec lubrification par submersion

(30) Priorität: 06.06.1987 DE 3719096
(43) Veröffentlichungstag der Anmeldung: 14.12.1988
(73) Patentinhaber: Iveco Magirus Aktiengesellschaft, D-89017 Ulm (DE)
(72) Erfinder: Koros, Jozsef M., Dipl.-Ing., D-7901 Lonsee (DE); Siehler, Willi, D-7906 Blaustein (DE)
(74) Vertreter: TER MEER STEINMEISTER & PARTNER GbR

(56) Entgegenhaltungen:
- EP-A- 0 067 639
- DE-C- 376 381
- DE-C- 825 359
- GB-A- 133 251
- US-A- 2 244 225

## Beschreibung

Die Erfindung betrifft ein Zahnrad-Getriebe mit Tauchschmierung gemäß dem Oberbegriff des Anspruchs 1.

Ein derartiges Getriebe ist allgemein bekannt.

Von der Firma Mercedes-Benz ist seit 1976 unter der Bezeichnung VG 1400-SW ein Umschaltgetriebe zum Umschalten zwischen einer Straßenübersetzung und einer Geländeübersetzung des Getriebes eingesetzt worden. Dieses Getriebe besaß einen höher liegenden zweiten Ölraum für die Tauchschmierung eines Zwischenzahnrades. Dieser zweite Ölraum hatte die Form eines stark aufgeweiteten v- oder u-förmigen Scheibensegments, dessen nach unten gerichtete Spitze sich im wesentlichen bis zum Boden des ersten Ölraums erstreckte.

Die DE-C-825 359 und die US-A-2 244 225 zeigen Getriebekonstruktionen aus jeweils zwei verbundenen Getrieben, in denen Ölräume mit unterschiedlich hohem Ölspiegel ausgebildet sind, in die Getrieberäder in entsprechend unterschiedlichen Höhen eintauchen. Dadurch wird nach Angaben der DE-C-825 359 sichergestellt, daß alle Getrieberäder in Öl eintauchen, ohne zu tief in das Ölbad einzutreten und damit Erwärmung und Letstungsverluste hervorzurufen.

Aufgabe der Erfindung ist die Schaffung eines Getriebes der obigen Art, bei dem die Schmierung aller in upterschiedlichen Höhen liegender Zahnräder sichergestellt ist und das so konzipiert ist, daß sich Verunreinigungen im Öl ablagern und die Verunreinigungen separat abgeführt werden können.

Gelöst wird die der Erfindung zugrundeliegende Aufgabe durch die im kennzeichnenden Teil des Anspruchs 1 angegebenen Merkmale.

Vorteilhaft weitergebildet wird der Erfindungsgegenstand durch die Merkmale der Unteransprüche 2 und 3.

Wesen der Erfindung ist, daß der zweite Ölraum als separater Ölraum mit eigenem Ablaßstutzen vorgesehen ist und einen eine Beruhigungszone bildenden Vertikalabschnitt aufweist. Die Zwischenwand ist in vorteilhafter Weiterbildung der Erfindung mit zusätzlichen Verschraubungsstellen zum Verschrauben der Gehäusehälften versehen, welche bei Verschraubung der Gehäusehälften eine zusätzliche Versteifung ergeben.

Der separate Ölraum weist zweckmäßigerweise in der in Axialrichtung des Getriebes gelegenen im wesentlichen vertikalen Außenwand einen Öleinlaß- bzw. Ölmeßstutzen auf.

Es ergibt sich eine vergleichsweise große Oberflächenabstrahlung des Öls, was mit einer Reduzierung der Betriebstemperatur des Öls einhergeht. Der separate Ölraum, der sich praktisch bis in Höhe des ersten Ölraums nach unten erstreckt, schafft eine Beruhigungszone, in welcher sich Verunreinigungen ablagern können, wobei die abgelagerten Verunreinigungen auch auf einfache Weise leicht abgeführt werden können. Dadurch, daß die Wände des separaten Ölraums gleichzeitig zur zusätzlichen Verschraubung und mithin Versteifung der Gehäusehälften genutzt werden können, ergibt sich eine Reduzierung der Biegemomente auf die vordere und hintere Stirnseite des Getriebes. Von Vorteil ist ferner die Vermeidung einer Ölumwälzpumpe. Das Getriebe ist grundsätzlich für den Betrieb höherer Drehzahlen auch ohne Ölumwälzpumpe geeignet.

Zwar ist aus EP-A-67 639 bekannt, einen Ölraum mit einer zusätzlichen Zwischenwand zu versehen, um einen zusätzlichen internen Ölraumabschnitt einzurichten. Der Ölraumabschnitt dient jedoch als Kühlzone für das Öl und ist unterseitig über eine Auslaßöffnung mit dem Hauptölraum verbunden.

Der zusätzliche Abschnitt ist mithin nicht als separater Ölraum ausgebildet. Durch die Verbindungsöffnung zum Hauptölraum treten im Betrieb der Vorrichtung Verwirbelungen im zusätzlichen Abschnitt auf. Von einer Beruhigung des Öls in diesem Abschnitt kann nicht die Rede sein.

Die Erfindung wird nachfolgend anhand eines Ausführungsbeispiels unter Bezugnahme auf die beigefügte Zeichnung näher beschrieben; es zeigen:
- Fig. 1: einen schematischen Vertikalschnitt durch das Getriebe, und
- Fig. 2: das Getriebe in einem Axialschnitt.

Gemäß Zeichnung umfaßt das Getriebe (1) mit Tauchschmierung an sich bekannte erste und zweite Gehäusehälften (3,4), die mit langschaftigen Schrauben (16) miteinander verschraubt sind. Das im Ausführungsbeispiel veranschaulichte Getriebe (1) besitzt ein unteres Zahnrad (6) auf der einen Welle (17) und ein oberes Zahnrad (8) auf der oberen Welle (18), wobei eine Zwischenwelle (19) zwischengeordnet ist, deren Zwischenrad (7) mit dem unteren Zahnrad (6) und deren seitliches Getriebezwischenrad (5) mit dem oberen Zahnrad (8) kämmt. Das untere Zahnrad (6) befindet sich in einer Tauchschmierung und reicht in einen an sich bekannten ersten Ölraum (2) oder Ölsumpf, der an tiefster Stelle des Gehäuses gelegen ist. Durch die Tauchschmierung des unteren Zahnrads (6) wird auch das mit diesem Zahnrad in Eingriff stehende Zwischenrad (7) im Betrieb mit Öl versorgt.

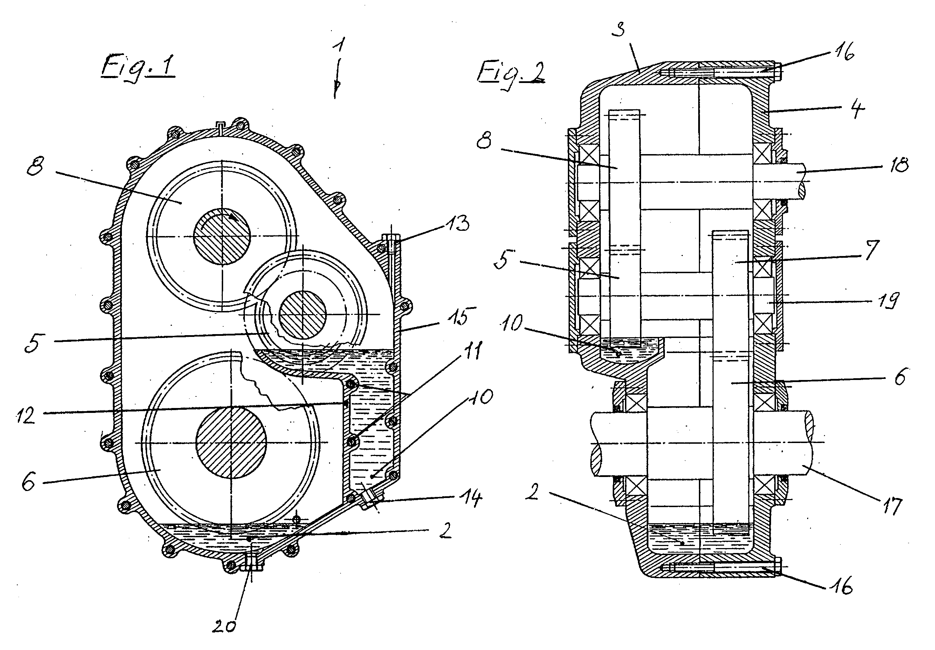

Das seitliche Getriebezwischenrad (5) seinerseits reicht unterseitig in einen zweiten separaten Ölraum bzw.Ölsumpf (10) und versorgt im Betrieb das obere Zahnrad (8) einschließlich Lagerstellen mit Öl. Der zweite Ölraum (10) wird gemäß Fig. 1 insbesondere durch eine integrierte in Axialrichtung des Getriebes (1) verlaufende Zwischenwand (12) gebildet, die sich über beide Gehäusehälften erstreckt und an ihrer Verbindungsstelle zusätzliche Verschraubungsstellen (11) vorsieht, die neben der eigentlichen Verschraubung (16) für eine zusätzliche Versteifung des Getriebegehäuses sorgen. Die Wand (12) umfaßt einen Vertikalabschnitt, der praktisch bis zum ersten Ölraum oder Ölsumpf (2) nach unten reicht, mithin ein zweiter separater Ölraum (10) ausgebildet wird, der vergleichsweise tief ist und eine große Beruhigungszone enthält, in welcher sich Verunreinigungen ablagern können.

Der zweite Ölraum (10) umfaßt als separater Ölraum einen eigenen Öleinlaß- bzw. Ölmeßstutzen (13) in der Vertikalwand (15) des Getriebes (1) sowie bodenseitig an tiefster Stelle gelegen einen Ölablaßstutzen (14), der zusätzlich zum Ölablaßstutzen (20) des ersten Ölraums (2) vorgesehen ist.

## Patentansprüche

1. Zahnradgetriebe mit Tauchschmierung, mit einem Getriebe-Gehäuse (3,4), mit einem unteren Zahnrad (6) auf einer unteren Welle (17), einem oberen Zahnrad (8) auf einer oberen Welle (18) und einer zwischengeordneten Zwischenwelle (19) mit einem Zwischenrad (7), das mit dem unteren Zahnrad (6) kämmt, und einem Getriebe-Zwischenrad (5), das mit dem oberen Zahnrad (8) kämmt, wobei sich das untere Zahnrad (6) in einer Tauchschmierung in einem ersten Ölraum (2) an der tiefsten Stelle des Getriebe-Gehäuses befindet und das Getriebe-Zwischenrad (5) unterseitig in einen zweiten Ölraum (10) eintaucht, der durch eine Zwischenwand (12) im Gehäuse gebildet wird und höher liegt als der erste Ölraum (2), wobei sich der zweite Ölraum (10) im wesentlichen bis zum ersten Ölraum (2) nach unten erstreckt und an seiner tiefsten Stelle einen Ölablaßstutzen (14) aufweist, dadurch **gekennzeichnet,** daß der zweite Ölraum (10) einen flachen Abschnitt, in den das Getriebe-Zwischenrad (5) eintaucht, und einen seitlich gegen diesen versetzten, sich bis zum ersten Ölraum (2) nach unten erstreckenden und eine Beruhigungszone für das Öl darstellenden Vertikalabschnitt aufweist, der durch einen Vertikalabschnitt der axial verlaufenden Zwischenwand (12) sowie durch eine Vertikalwand (15) des Getriebes (1) begrenzt ist.

2. Getriebe nach Anspruch 1, dadurch **gekennzeichnet,** daß die Zwischenwand (12) des zweiten Ölraums (10) zusätzliche Verschraubungsstellen (11) zum Verschrauben von zwei Gehäusehälften (3,4) aufweist.

3. Getriebe nach Anspruch 1 oder 2, dadurch **gekennzeichnet,** daß in der in Axialrichtung des Getriebes (1) gelegenen, im wesentlichen vertikalen Außenwand (15) des zweiten Ölraums ein Öleinlaß- bzw, Ölmeßstutzen (13) vorgesehen ist.

## Revendications

1. Transmission à engrenages à graissage par barbotage, comprenant un carter de transmission (3, 4), une roue dentée inférieure (6) sur un arbre inférieur (17), une roue dentée supérieure (8) sur un arbre supérieur (18), et un arbre intermédiaire (19) intercalé avec une roue intermédiaire (7) qui s'engrène avec la roue dentée inférieure (6) et avec une roue intermédiaire de transmission (5) qui s'engrène avec la roue dentée supérieure (8), la roue dentée inférieure (6) étant graissée par barbotage dans une première chambre d'huile (2) située au point le plus bas du carter de transmission, et la partie inférieure de la roue intermédiaire de transmission (5) plongeant dans une seconde chambre d'huile (10) qui est formée par une paroi intermédiaire (12) du carter et se trouve plus haut que la première chambre d'huile (2), la seconde chambre d'huile (10) s'étendant vers le bas sensiblement jusqu'à la première chambre d'huile (2) et comportant une tubulure de vidange d'huile (14) à son point le plus bas, caractérisée en ce que la seconde chambre d'huile (10) comporte une portion plate, dans laquelle plonge la roue intermédiaire de transmission (5), et une portion verticale qui est décalée latéralement par rapport à la précédente, qui s'étend vers le bas jusqu'à la première chambre d'huile (2), qui comprend une zone de stabilisation pour l'huile et qui est délimitée par une portion verticale de la paroi intermédiaire axiale (12) ainsi que par une paroi verticale (15) de la transmission (1).

2. Transmission selon la revendication 1, caractérisée en ce que la paroi intermédiaire (12) de la seconde chambre d'huile (10) comporte des points de vissage supplémentaires (11) pour visser deux moitiés de carter (3, 4).

3. Transmission selon la revendication 1 ou 2, caractérisée en ce qu'une tubulure d'admission d'huile ou de mesure (13) est prévue dans la paroi extérieure sensiblement verticale (15) qui fait partie de la seconde chambre d'huile et qui se trouve dans la direction axiale de la transmission (1).

## Claims

1. Gear transmission with splash lubrication, having a transmission housing (3, 4), a lower gear (6) on a lower shaft (17), an upper gear (8) on an upper shaft (18) and arranged therebetween an intermediate shaft (19) with an intermediate gear (7), which meshes with the lower gear (6), and with an intermediate transmission gear (5), which meshes with the upper gear (8), the lower gear (6) being located in a splash lubrication in a first oil bath (2) at the lowest point of the transmission housing and the transmission intermediate gear (5) being immersed at its lower side in a second oil bath (10), which is formed by a partition wall (12) in the housing and is placed higher than the first oil bath (2), the second oil bath (10) extending downwards substantially as far as the first oil bath (2) and having at its lowest point an oil outlet connection (14), **characterised in that** the second oil bath (10) comprises a shallow part, into which the transmission gear (5) immerses and, laterally offset in relation thereto, a vertical part extending downwards as far as the first oil bath (2) and providing a steadying zone for the oil, which vertical part is bounded by a vertical portion of the axially running partition wall (12) and also by a vertical wall (15) of the transmission (1).

2. Transmission according to claim 1, **characterised in that** the partition wall (12) of the second oil bath (10) has additional threaded points (11) for screw connection of two housing halves (3, 4).

3. Transmission according to claim 1 or 2, **characterised in that** in the substantially vertical outer wall (15) of the second oil bath, which wall is arranged in the axial direction of the transmission (1), an oil inlet and oil measuring gland (13) is provided.
